# EUROPÄISCHE PATENTSCHRIFT

(11) **EP 0 853 120 B1**
(45) Veröffentlichungstag und Bekanntmachung des Hinweises auf die Patenterteilung: **27.04.2005**
(21) Anmeldenummer: 98100077.1
(22) Anmeldetag: 05.01.1998
(51) Int. Cl.: C12C 13/02, B65D 90/10

(54) **Sudgefäss mit Mannlochöffnung**
Brew kettle with manhole
Cuve de brassage avec un trou d'homme

(30) Priorität: 14.01.1997 DE 29700558 U
(43) Veröffentlichungstag der Anmeldung: 15.07.1998
(73) Patentinhaber: Anton Steinecker Maschinenfabrik GmbH, 85356 Freising-Attaching (DE)
(72) Erfinder: Banke, Friedrich Dipl.-Ing., 84416 Inning am Holz (DE); Flossmann, Rudolf Dipl.-Ing., 85416 Langenbach (DE); Gratzer, Harald, 85459 Berglern (DE)
(74) Vertreter: Grünecker, Kinkeldey, Stockmair & Schwanhäusser Anwaltssozietät

(56) Entgegenhaltungen:
- DE-U- 9 010 033
- DE-U- 9 111 870
- US-A- 4 944 233

## Beschreibung

Die Erfindung betrifft ein Sudgefäß mit wenigstens einer von einer Zarge umgebenen Mannlochöffnung, die mit einem mittels einer Veniegelungseinrichtung verriegelbaren Deckel verschließbar ist, wobei die Verriegelungseinrichtung einen drehbaren Verriegelungsring aufweist.

Durch Deckel verschließbare Mannlochöffnungen sind im Allgemeinen an Sudgefäßen, wie Sudpfannen, Whirlpools, Läuterbottichen und dergl. üblich. Durch Öffnen des Deckels kann eine Bedienungsperson durch die Mannlochöffnung in das Sudgefäß hineinsteigen und dort Wartungs- und Kontrollarbeiten durchführen. Nach Beendigung dieser Arbeiten kann die Bedienungsperson durch die Mannlochöffnung das Sudgefäß wieder verlassen. Vor Inbetriebnahme des Sudgefäßes wird der Deckel mittels einer Verriegelungseinrichtung wieder dichtend verschlossen. Im Allgemeinen ist in den Deckel ein Sichtglas eingelassen, so dass man auch ohne Öffnen des Dekkels das Innere des Sudgefäßes inspizieren kann.

Bei einem in dem deutschen Gebrauchsmuster G 91 11 870 bekannten Sudgefäß umfasst die Verriegelungseinrichtung des Deckels einen auf der Deckelinnenseite verschieblich angeordneten Verriegelungsring, der über an der Innenseite des Dekkels befestigte Bolzen drehbar gelagert ist und mit Rampen zusammenwirkt, die an der Innenseite der Zarge angeordnet sind.

Obwohl sich diese Lösung in der Praxis bewährt hat, ist sie doch in mancherlei Hinsicht verbesserungsfähig. Insbesondere bilden die auf der Innenseite des Deckels angeordneten Teile der Verriegelungseinrichtung Spritzschatten und Toträume, so dass sich dort beim Betrieb des Sudgefäßes Ablagerungen ansammeln können, die einer automatischen Reinigung nicht einfach zugänglich sind. Außerdem ist die Größe eines im Deckel anzubringenden Sichtfensters durch den darunter liegenden Verriegelungsring begrenzt bzw. wird die Sicht durch den Verriegelungsring in das Innere des Sudgefäßes beeinträchtigt.

Ausgehend von diesem Stand der Technik liegt der Erfindung die Aufgabe zugrunde, ein Sudgefäß vorzuschlagen, bei dem der die Mannlochöffnung verschließende Dekkel in konstruktiv einfacher Art und Weise verriegelbar ist, ohne dass Spritzschatten oder Toträume entstehen. Bei einem Deckel mit Sichtfenster soll außerdem durch Teile der Verriegelungseinrichtung die Sicht in das Innere des Sudgefäßes nicht behindert werden.

Bei einem Sudgefäß der eingangs genannten Art wird diese Aufgabe dadurch gelöst, dass der Verriegelungsring an der Außenseite der Zarge gelagert ist und wenigstens einen Verriegelungsbolzen aufweist, der mit einer in einem Kragen des Deckels ausgebildeten Ausnehmung zusammenarbeitet.

. Bei dieser Lösung liegt also der Verriegelungsring an der Außenseite der Zarge, so dass das Innere, also der innere Durchmesser der Zarge von Teilen der Verrieglungseinrichtung freibleibt. Der Verriegelungsring wirkt nicht mit Teilen innerhalb der Zarge zusammen, sondern mit dem weiter außenliegenden Kragen des Deckels, so dass nicht nur keine Toträume im Inneren der Zarge entstehen, die schwer reinigbar wären, sondern auch dann, wenn im Deckel ein Schauglas angeordnet ist, eine einfache Sicht in das Innere des Sudgefäßes gewährleistet ist.

In weiterer, sehr vorteilhafter Ausgestaltung der Erfindung ist vorgesehen, dass der Verriegelungsring aus zwei miteinander verschraubbaren Ringen besteht, die eine U-förmige Aufnahme für einen Lagerring bilden, der seinerseits an der Außenwand der Zarge in einer dort korrespondierend ausgebildeten Ringnut liegt. Diese Art und Weise der Lagerung des Verriegelungsrings ist sehr einfach. Es wird auf der Außenseite der Zarge eine radial nach innen weisende Ringnut vorgesehen, in der ein Lagerring, der beispielsweise aus Teflon oder aus einem geeigneten stabilen Kunststoff gefertigt sein kann, eingelegt. Dieser Lagerring kann aus bandförmigem Material geschnitten und in die Nut eingesetzt werden. Durch Überstülpen der beiden den Verriegelungsring bildenden Ringe wird der Lagerring in seiner Nut gehalten. Der Verriegelungsring selbst nimmt mit einer dort ebenfalls ausgebildeten korrespondierenden U-förmigen Aufnahme ebenfalls den Lagerring auf, so dass der Verriegelungsring drehbar an der Zarge über den Lagerring abgestütz und geführt wird. Auf diese Weise ist eine konstruktiv sehr einfache Lagerung des Verrieglungsrings verwirklicht.

In einer weiteren vorteilhaften Ausgestaltung der Erfindung ist vorgesehen, dass die Ausnehmung einen in Schließrichtung weisenden und unten offenen Einlaufbereich aufweist, an den sich ein geschlossener in Umfangsrichtung weisender Verriegelungsabschnitt anschließt. Die Ausnehmung bildet somit zusammen mit dem Verriegelungsbolzen eine Art Bajonettverschluß, wobei beim Schließen des Deckels der Verriegetungsbolzen in den Einlaufbereich einläuft und dann durch Verdrehen des Verriegelungsrings der Bolzen über den Verriegelungsabschnitt in eine Endanschlagposition gelangt, in der dann ein festes Verriegeln des Deckels bewirkt wird.

Wenn in weiterer Ausgestaltung der Erfindung vorgesehen ist, dass die mit dem Verriegelungsbolzen zusammenwirkende Begrenzungsfläche der Ausnehmung als zur Verriegelungsendposition hin leicht ansteigende Rampe ausgebildet ist, die in einer Verriegelungsvertiefung endet, wird dadurch erreicht, dass beim Verdrehen des Verriegelungsrings der Bolzen an der Rampe entlang läuft und damit den Deckel nach und nach fester in seine Verschließposition drückt, bis die endgültige Verriegelungposition erreicht ist. Die Verriegelungsvertiefung, die in der Verriegelungsposition vorgesehen ist, bewirkt, dass dann, wenn das Sudgefäß unter Druck steht, ein mechanisches Öffnen praktisch nicht mehr möglich ist, weil der Deckel gegen den in der Verriegelungsvertiefung liegenden Bolzen drückt und damit eine formschlüssige Verbindung zwischen Verriegelungsring und Deckel entsteht, so dass ein Öffnen ohne Werkzeug, solange das Sudgefäß auch unter nur geringfügigem Druck steht, nicht möglich ist.

In weiterer vorteilhafter Ausgestaltung der Erfindung ist vorgesehen, dass an der Außenseite der Zarge ein Endschalter angeordnet ist, der mit einem Schaltstift mit dem Verriegelungsring zusammenwirkt. Dabei ist günstig, daß der Verriegelungsring bis auf eine Vertiefung in Geschlossen-Stellung eine Schaltfläche bildet, die den Schaltstift beim Verdrehen aus der Verschließposition in die Öffnungsposition vor Erreichen der Öffnungsposition betätigt. Diese Konstruktion sichert weithin ein Überbrücken des Endschalters ohne Zuhilfenahme von Werkzeugen, wie das bei anderen Konstruktionen der Fall ist.

Durch diese Lösung wird erreicht, dass der Schaltstift nicht erst beim Öffnen des Deckels betätigt wird, sondern bereits dann, wenn der Verriegelungsring aus seiner Verriegelungsposition in Richtung der Öffnungsstellung bewegt wird. Dadurch, dass der Schaltstift betätigt wird bevor die Öffnungsposition erreicht wird, wird sichergestellt, dass die über den Endschalter betätigten Maschinenteile, wie z.B. Rührwerk, Spritzanlage oder dergl. im Inneren des Sudgefäßes zuverlässig abgeschaltet werden, noch bevor der Deckel überhaupt geöffnet werden kann. Dadurch wird die Sicherheit beträchtlich erhöht.

In weiterer vorteilhafter Ausgestaltung ist vorgesehen, dass im Bereich der Lager für den Deckel wenigstens eine Rastscheibe mit dem Deckel beim Öffnen und Schließen drehend angeordnet ist, die eine Rastfläche aufweist, die in der Öffnungsposition des Verriegelungsrings in eine dort ausgebildete Rille beim Öffnen des Deckels einläuft und damit ein Rückdrehen des Verriegelungsrings blockiert.

Diese Rastscheibe bewirkt somit, dass nach Beginn der Öffnungsbewegung des Deckels, also wenn der Deckel angehoben wird, die Rastscheibe mit einem Teil ihrer Fläche in eine Rille am Verriegelungsring einläuft und damit verhindert, dass der Verriegelungsring zurückgedreht werden kann. Dadurch wird sichergestellt, dass der in der Öffnungsposition den Endschalter betätigende Verriegelungsring nicht in eine Stellung verdreht werden kann, in der der Endschalter wieder freigegeben wird, solange der Deckel geöffnet ist. Es muß also zuerst der Deckel geschlossen werden, damit der Verriegelungsring wieder in die Schließposition verbracht werden kann und dabei dann den Endschalter freigibt, so dass die Aggregate im Inneren des Sudgefäßes dann wieder weiterarbeiten können.

Dabei ist es auch von Vorteil, wenn die Rastscheibe eine Anschlagnase aufweist, die die maximale Öffnungsstellung durch Anlage an der Unterseite des Veniegelungsrings bestimmt. Die Rastscheibe hat somit zwei Funktionen. Man spart sich dadurch einen gesondert ausgebildeten Anschlag.

In weiterer vorteilhafter Ausgestaltung der Erfindung ist vorgesehen, dass am deckelseitigen Rand der Zarge eine umlaufende Dichtung angeordnet ist, die so ausgebildet ist, dass bei Druckerhöhung im Innem des Sudgefäßes die Dichtkraft zwischen Dekkel und Dichtung erhöht wird. Derartige Dichtungen stellen sicher, dass die Sicherheit und Dichtigkeit des Deckels bei erhöhtem Innendruck im Innem des Sudgefäßes nicht nachlässt, sondern im Gegenteil erhöht wird. Typische, für diesen Zweck geeignete Dichtungen sind Lippendichtungen, die eine Dichtlippe aufweisen, die sich an die Unterseite des Deckels anlegt und mit zunehmendem Druck immer mehr gegen den Deckel angepreßt wird.

Schließlich ist noch vorgesehen, dass im Kragen des Deckels und im Verriegelungsring in Verriegelungsposition fluchtende Durchbrechungen ausgebildet sind, durch die ein Steckschloßschließzylinder abschließbar eingesetzt werden kann. In der Schließposition ist es somit möglich, mit einem einfachen Steckschloß vemegelungsring und Kragen zu verschließen, so dass der Deckel nur mit einem Schlüssel nach Herausnehmen des Steckschloßzylinders geöffnet werden kann.

Die Erfindung wird nun im Folgenden anhand der Zeichnungen weiter erläutert und beschrieben: Dabei zeigt
- Figur 1: die Draufsicht auf den Deckel für eine Mannlochöffnung bei einem nicht näher dargestellten Sudgefäß;
- Figur 2: eine Schnittansicht entlang der Schnittlinie B-B der Figur 1, wobei der Verriegelungsbolzen 6 in die Schnittebene hineingedreht ist;
- Figur 3: die Seitenansicht H in Figur 1;
- Figur 4: die Seitenansicht C der Figur 5;
- Figur 5: die Seitenansicht des geschlossenen Deckels in der linken Hälfte geschnitten;
- Figur 6: eine Draufsicht auf das Mannloch bei geöffnetem Deckel.

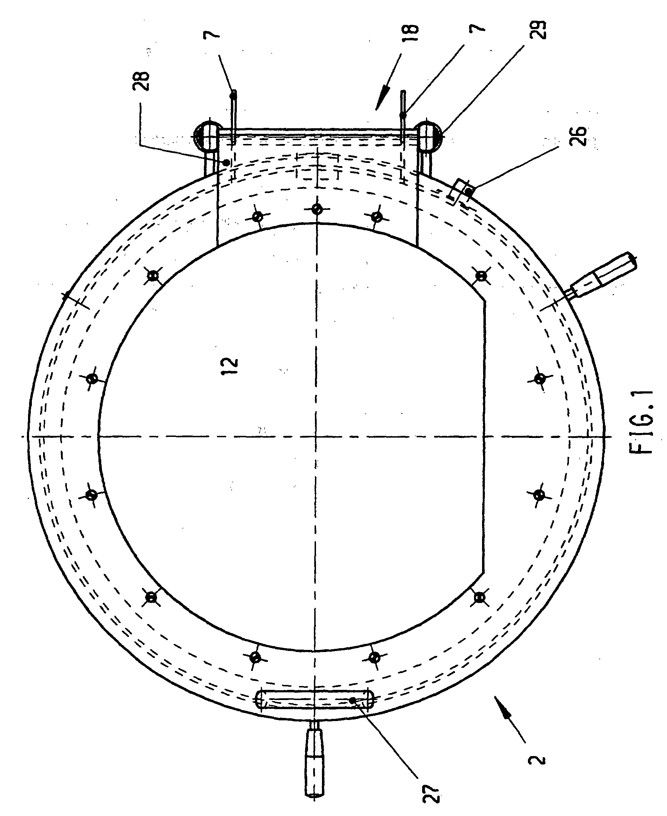

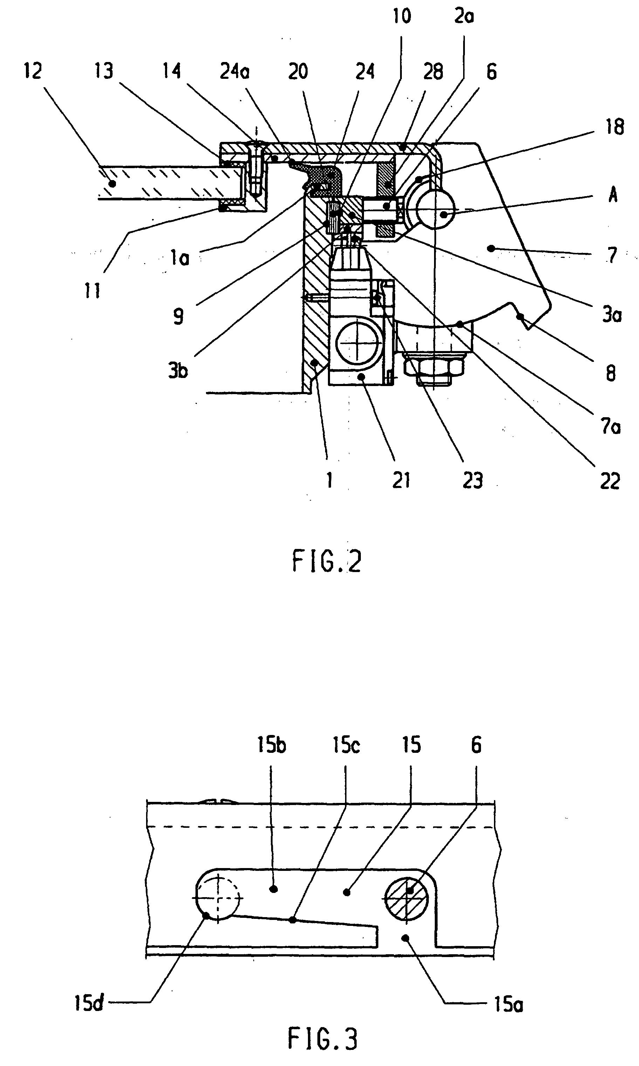

In der Figur 1 erkennt man in einer Draufsicht den erfindungsgemäß ausgestalteten Deckel 2, der auf einer auf einem nicht näher dargestellten Sudgefäß aufgebrachten Zarge 1 ruht und damit eine Mannlochöffnung verschließt, durch die bei geöffnetem Deckel eine Wartungsperson in das Innere des Sudgefäßes einsteigen kann. Der größte Flächenbereich des Deckels wird von einem druck- und hitzebeständigen Schauglas 12 gebildet, das über Schauglasrahmen 11 (Figur 2) und geeignete Dichrungen 13 mit dem Deckelrahmen 14 verbunden ist.

Der Deckel ist über eine Lagerplatte 28 über das Lager 18 schwenkbar mit der Zarge 1 und damit mit dem Sudgefäß verbunden. Zum Öffnen dient ein Griff 27.

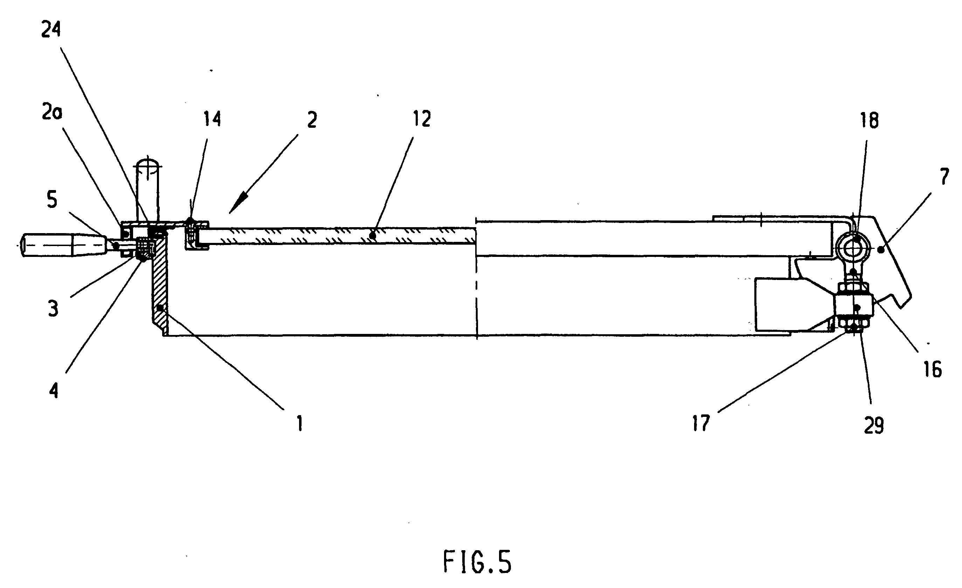

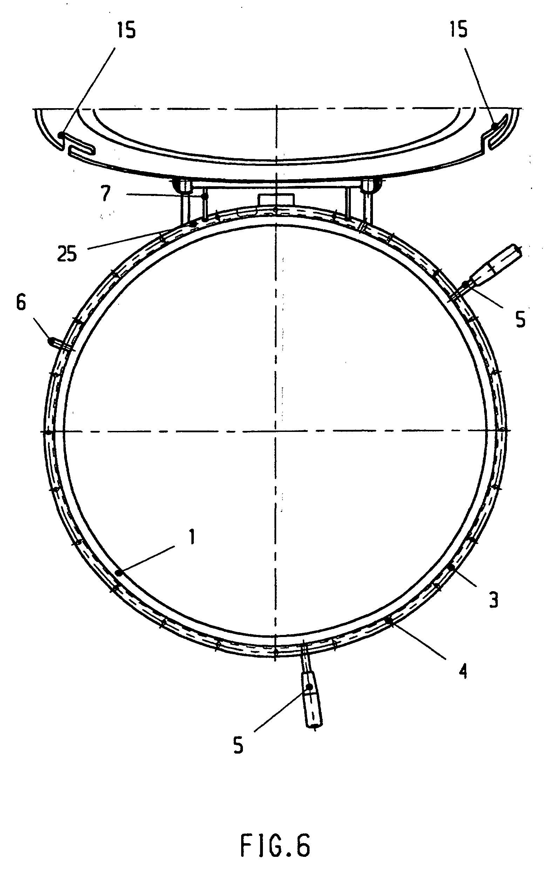

Wie Figur 2 im Zusammenhang mit Figur 5 erkennen läßt, ist die Zarge 1 an ihrer Außenseite mit einer umlaufenden Ringnut 9 versehen, in die ein Lagerring 20, beispielsweise aus Teflon oder aus einem anderen beständigen Kunststoff eingelegt ist. Der Lagerring wird in axialer Richtung unbeweglich in der Ringnut 9 aufgenommen und steht mit etwa der Hälfte seiner Dicke über die Außenwand der Zarge vor. Mit diesem vorstehenden Bereich greift der Lagerring 20 in eine korrespondierend ausgebildete, von zwei Ringen 3a und 3b erzeugten Aufnahme 10 ein. Die beiden Ringe 3a und 3b sind, wie Figur 6 erkennen läßt, über Schrauben 4 miteinander verbunden und bilden so den Verriegelungsring 3, der damit axial und radial an der Außenwand der Zarge bzw. des Lagerrings gehalten, in Umfangsrichtung jedoch verdrehbar gelagert wird. An dem Lagerring sind über den Umfang verteilt im Winkel von 120° drei Bolzen 6 angebracht, von denen zwei mit Griffhilfen versehen als Griffstangen 5 verwirklicht sind (vgl. Figur 6). Diese Verriegelungsbolzen 5, 6 stehen radial nach außen ab und arbeiten mit Ausnehmungen 15 zusammen, die entsprechend an einem vertikal verlaufenden Kragen 2a des Deckels ausgebildet sind (Figur 3). Die Ausnehmungen 15 gehen von einem im Wesentlichen vertikal gerichteten Einlaufbereich 15a in einen im Wesentlichen horizontal in Umfangsrichtung verlaufende Verriegelungsabschnitt 15b über, der in einer Verrieglungsvertiefung 15d endet (vgl. Figur 3). Die Begrenzungsfläche 15c, die beim Verriegeln mit dem Verriegelungsbolzen in Berührung kommt, ist als leicht ansteigende Rampe ausgebildet, so dass sich zur Verschließposition 15d hin der Anpreßdruck erhöht. In der Verriegelungsposition rastet der Bolzen in die Verriegelungsvertiefung 15d ein.

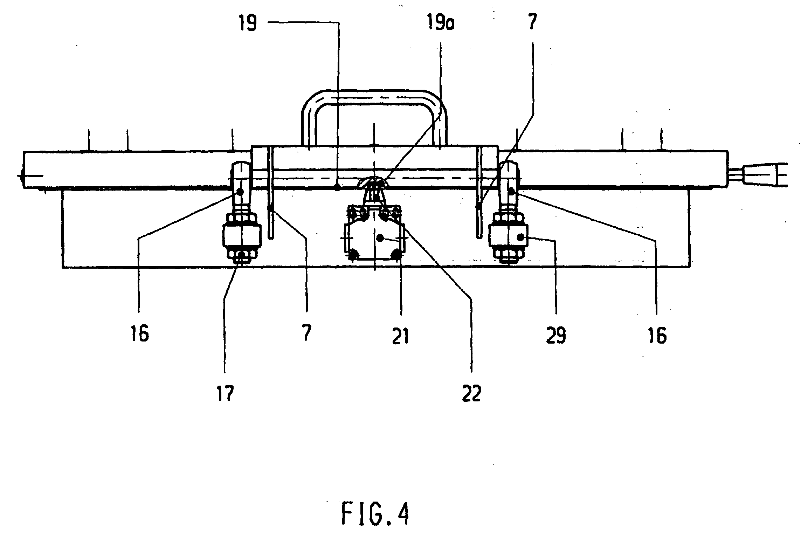

Wie insbesondere Figur 4 erkennen läßt, ist zwischen den beiden Augenschrauben 16, die über Muttern 17 an den Lageraugen 29 befestigt sind und somit die Lagerung für den Deckel bilden, ein Endschalter 21 mittels Schrauben 23 an der Zarge 1 angeordnet, der mit dem Schaltstift 22 in eine Vertiefung 19a an der Unterseite des Verriegelungsring 3 eingreift (s. hierzu auch Figur 2). Der Weg, den der Verriegelungsring zur Betätigung des Schaltstiftes mit der Schaltfläche 19 zurücklegen muß, ist kürzer als der Abstand zwischen der Verriegelungsverdefung 15d und dem Einlaufbereich 15a der Ausnehmung 15, so dass beim Verdrehen des Rings aus der Verriegelungsposition (Figur 3, gestrichelt dargestellt) der Schalter durch die Schaltfläche 19 betätigt wird, bevor der Ring mit seinen Bolzen die Öffnungsposition erreicht hat, in der der Bolzen, wie in Figur 3 voll dargestellt, im Einlaufbereich 15a zu liegen kommt und damit ein Öffnen des Deckels möglich ist. Der Endschalter 21 kann noch, wie nicht näher dargestellt ist, durch ein Gehäuse abgedeckt sein, so dass er in keinem Fall frei zugänglich und damit auch nicht entgegen den Sicherheitsvorschriften überbrückbar ist.

Insbesondere aus Figur 2 ist außerdem zu erkennen, dass mit der Achse A, um die der Deckel beim Öffnen schwenkt, zwei (vgl. Figur 4) Rastscheiben 7 verbunden sind, die beim Öffnen des Deckels mit dem Deckel verschwenken. Wie insbesondere Figur 6 zeigt, ist der Verriegelungsring 3 an in entsprechend den Rastscheiben 7 vorgesehenen Stellen mit Durchbrüchen oder Rillen 25 versehen, die in der Öifnungstellung so zu liegen kommen, dass die Rastscheiben mit ihren Eingriffsflächen 7a in diese Rillen eingreifen und dann dabei ein Verdrehen des Verriegelungsrings 3 mechanisch verhindern. Da in dieser Position andererseits der Verriegelungsring den Endschalter niederdrückt und damit sicherstellt, dass die Aggregate im Innem des Sudgefäßes ausgeschaltet sind, besteht keine Möglichkeit, den Endschalter irgendwie zu überbrücken, was die Sicherheit beträchdich erhöht. Erst wenn der Deckel geschlossen und damit die Rastscheibe 7 mit ihrer Rastkante 7a außer Eingrif mit den Rillen 25 kommt (s. hierzu auch Figur 5), kann der Vemegelungsring 3 wieder verdreht werden, so dass erst in der Verriegetungsposition der Endschalter wieder ausgeschaltet wird.

Die beiden Rastscheiben 7 sind außerdem mit einer Anschlagnase 8 ausgebildet, die in geöffneter Position des Deckels (vgl. Figur 6) zur Anlage an der Unterseite des Verriegelungsrings 3 kommt, so dass die Öffnungsposition des Deckels damit festgelegt ist.

Wie aus der Figur 2 außerdem ersehen werden kann, ist am oberen Rand 1a der Zarge 1 ein Dichtprofil 24 umlaufend angebracht, das mit einer Dichtlippe 24a auf die Unterseite des Deckels wirkt. Erhöht sich der Druck im Inneren des Sudgefäßes, wird diese Dichtlippe 24a mit erhöhter Dichtkraft gegen die Unterseite des Deckels gepreßt und dichtet somit zuverlässig ab.

Die Funktionsweise der beschriebenen Vorrichtung ist nun die Folgende. In der Öffnungsposition, in der der Deckel die in Figur 6 dargestellte Position einnimmt, liegt die Rastnase 8 mit ihrer Unterseite am Verriegelungsring an und verhindert ein Abfallen des Deckels nach hinten. Die Lage ist dabei bevorzugt eine Übertotpunktlage, so dass das Gewicht des Deckels den Deckel in der Öffnungsstellung hält. Der Verriegelungsring 3 befindet sich in einer Stellung, in der die Bolzen 6 bzw. Griffstangen 5 mit den Einlaufbereichen 15a am Kragen 2 des Deckels fluchten. Die Schaltfläche 19 angrenzend an die Schaltvertiefung 19a drückt auf den Schaltstift 22 des Endschalters 21, so dass alle Aggregate im Inneren stillgesetzt sind. Die Rastflächen 7a der Rastscheibe 7 liegen in den Rillen 25 und verhindern somit ein Verdrehen des Verriegelungsrings.

Soll nun der Deckel verschlossen werden, so kann er aus der Öffnungsposition in die Schließposition verbracht werden. Etwa bei Erreichen der Horizontalposition treten die Bolzen bzw. die Griffstangen 5 in den Einlaufbereich 15a der Ausnehmung 15 ein und kommen in der in Figur 3 durchgezogen dargestellten Position zu liegen.In dieser Stellung hat die Rastscheibe, wie Figur 5 zeigt, die Rillen 25 freigegeben, sind also außer Eingriff. Der Endschalter ist noch betätigt. Jetzt kann die Bedienungsperson durch Ergreifen der beiden Griffstangen 5 den Verriegelungsring in Richtung der Verriegelungsposition (in Figur 6 im Uhrzeigersinn) drehen. Dabei laufen die Bolzen 6 in den Ausnehmungen 15 (in Figur 3 nach links) und drücken über die Rampe 15c den Deckel nach unten u.a. auch gegen die Dichtkraft der Dichtung 24, bis die in Figur 3 gestrichelt dargestellte Verriegelungsposition erreicht wird. In dieser Position entriegelt der Endschalter 21 und nimmt die in Figur 4 zu erkennende Position ein. Damit ist der Deckel fest verschlossen.

In korrespondierende am Verriegelungsring 3 und dem Kragen 2a ausgebildete Durchbrüche die in Verriegelungsposition miteinander fluchten und in der Zeichnung nicht näher dargestellt sind, kann dann ein Schließzylinder 26 eingesetzt werden, so dass die Verriegelungsposition abschließbar beibehalten werden kann. Soll nach einem Kochvorgang im Inneren des Sudgefäßes der Deckel geöffnet werden, ist dies erst möglich, wenn das Sudgefäß im Wesentlichen drucklos ist, weil dann, wenn das Sudgefäß noch unter Druck steht, der Deckel durch die Druckkraft gegen die Bolzen in der Verriegelungsposition 15d gedrückt wird und somit ein Öffnen mit normalem Kraftaufwand nicht möglich ist.

Zum Öffnungsvorgang laufen die Vorgänge in der umgekehrten Reihenfolge ab.

Wie aus den Erläuterungen der obigen Zeichnungen deutlich wird, ist das Innere der Zarge 1 frei von Einbauten, d.h. mit anderen Worten, es entstehen durch den Verriegelungsmechanismus im Inneren der Zarge keine Toträume oder schwer zugängliche Bereiche, in denen sich Ablagerungen bilden könnten. Die Konstruktion ist insgesamt sehr einfach und zuverlässig. Praktisch der gesamte Durchmesser der Zarge 1 kann als Schaubereich zur Verfügung stehen, so dass das Inspizieren auch bei geschlossenem Deckel einfach möglich ist. Die Bedienungssicherheit ist beträchtlich erhöht, weil sichergestellt ist, dass der Endschalter 21 nicht unter Umgehung der Sicherheitsvorschriften überbrückbar ist und ein Öffnen solange nicht möglich ist, wie der Behälter noch unter auch nur geringem Druck steht.

## Patentansprüche

1. Sudgefäß mit wenigstens einer von einer Zarge umgebenen Mannlochöffnung, die mit einem mittels einer Verriegelungseinrichtung verriegelbaren Deckel verschließbar ist, wobei die Vemegetungseinrichtung einen drehbaren Verriegelungsring aufweist,
**dadurch gekennzeichnet, dass**
der Verriegelungsring (3, 3a, 3b) an der Außenseite der Zarge (1) gelagert und wenigstens einen Verriegelungsbolzen (6) aufweist, der mit einer in einem Kragen (2a) des Deckels (2) ausgebildeten Ausnehmung (15) zusammenarbeitet.

2. Sudgefäß nach Anspruch 1,
**dadurch gekennzeichnet, dass**
der Verriegelungsring (3) aus zwei miteinander verbindbaren Ringen (3a, 3b) besteht, die eine U-förmige Aufnahme (10) für einen Lagerring (20) bilden, der seinerseits an der Außenwand der Zarge (1) in einer dort korrespondierend ausgebildeten Ringnut (9) liegt.

3. Sudgefäß nach Anspruch 1 oder 2,
**dadurch gekennzeichnet, dass**
die Ausnehmung (15) einen in Schließrichtung weisenden und unten offenen Einlaufbereich (15a) aufweist, an den sich ein geschlossener, in Umfangsrichtung weisender Verriegelungsabschnitt (15b) anschließt.

4. Sudgefäß nach Anspruch 3,
**dadurch gekennzeichnet, dass**
die mit dem Verriegelungsbolzen (6) zusammenwirkende Begrenzungsfläche (15c) der Ausnehmung (15) als zur Verriegelungsendposition leicht ansteigende Rampe ausgebildet ist, die in einer Verriegelungsvertiefung (15d) endet.

5. Sudgefäß nach wenigstens einem der vorangegangenen Ansprüche,
**dadurch gekennzeichnet, dass**
an der Außenseite der Zarge (1) ein Endschalter (21) angeordnet ist, der mit einem Schaltstift (22) mit dem Verriegelungsring zusammenwirkt.

6. Sudgefäß nach Anspruch 5,
**dadurch gekennzeichnet, dass**
der Verriegelungsring eine Schaltfläche (19) aufweist, die den Schaltstift (22) beim Verdrehen aus der Verschließposition in die Öffnungsposition vor Erreichen der Öffnungsposition betätigt.

7. Sudgefäß nach wenigstens einem der vorangegangenen Ansprüche,
**dadurch gekennzeichnet, dass**
im Bereich der Lager (18) für den Deckel (2) wenigstens eine Rastscheibe (7) mit dem Deckel beim Öffnen und Schließen drehend angeordnet ist, die eine Rastfläche (7a) aufweist, die in der Öffnungsposition des Verriegelungsrings (3) in eine dort ausgebildete Rille (25) beim Öffnen des Deckels einläuft und damit ein Rückdrehen des Verriegelungsrings blockiert.

8. Sudgefäß nach Anspruch 7,
**dadurch gekennzeichnet, dass**
die Rastscheibe (7) eine Anschlagnase (8) aufweist, die die maximale Öffnungsstellung durch Anlage an der Unterseite des Verriegelungsrings (3) bestimmt.

9. Sudgefäß nach wenigstens einem der vorangegangenen Ansprüche,
**dadurch gekennzeichnet, dass**
am deckelseitigen Rand (1a) der Zarge (1) eine umlaufende Dichtung (24) angeordnet ist, die so ausgebildet ist, dass bei Druckerhöhung im Innem des Sudgefäßes die Dichtkraft zwischen Deckel und Dichtung erhöht ist.

10. Sudgefäß nach wenigstens einem der vorangegangenen Ansprüche,
**dadurch gekennzeichnet, dass**
im Kragen des Deckels und im Verriegelungsring in Verriegelungsposition fluchtende Durchbrechungen ausgebildet sind, durch die ein Steckschloßschließzylinder (26) abschließbar eingesetzt werden kann.

## Claims

1. A brewing vessel comprising at least one manhole opening which is surrounded by a frame and which can be closed with a lid which can be locked with the aid of a locking means that comprises a rotatable locking ring,
**characterized in that**
said locking ring (3, 3a, 3b) is supported on the outside of said frame and comprises at least one locking bolt (6) which cooperates with a recess (15) formed in a collar (2a) of said lid (2).

2. A brewing vessel according to claim 1,
**characterized in that**
said locking ring (3) consists of two interconnectable rings (3a, 3b) which form a U-shaped receiving portion (10) for a bearing ring (20) which, in turn, is located on the outer wall of said frame (1) in a complementary annular groove (9).

3. A brewing vessel according to claim 1 or 2,
**characterized in that**
said recess (15) has an inlet portion (15a) which is oriented in the closing direction and is open downwards and which is followed by a closed locking section (15b) which is oriented in circumferential direction.

4. A brewing vessel according to claim 3,
**characterized in that**
the boundary surface (15c) of said recess (15) which cooperates with said locking bolt (6) is formed as a ramp which slightly ascends towards the locking end position and which ends in a locking recess (15d).

5. A brewing vessel according to at least one of the preceding claims,
**characterized in that**
a limit switch (21) which with a switching pin (22) cooperates with said locking ring is arranged on the outside of said frame (1).

6. A brewing vessel according to claim 5,
**characterized in**
**that** said locking ring comprises a switching surface (19) which operates said switching pin (22) upon rotation from the closing position into the opening position before the opening position is reached.

7. A brewing vessel according to at least one of the preceding claims,
**characterized in that**
in the area of bearings (18) for said lid (2), at least one locking disc (7) is rotatably arranged with said lid during opening and dosing, said locking disc comprising a locking surface (7a) which in the opening position of said locking ring (3) enters into a groove (25) formed in said ring when said lid is being opened, and thus blocks a reversed rotation of said locking ring.

8. A brewing vessel according to claim 7,
**characterized in that**
said locking disc (7) comprises a stop nose (8) which defines the maximum opening position by abutment on the bottom side of said locking ring (3).

9. A brewing vessel according to at least one of the preceding claims,
**characterized in that**
a surrounding seal (24) is arranged on the edge (1a) of said frame (1) at the lid side, said seal being designed such that the sealing force is increased between lid and seal upon increase in pressure in the interior of said brewing vessel.

10. A brewing vessel according to at least one of the preceding claims,
**characterized in that**
penetrations which are in alignment in the locking position are formed in the collar of said lid and in said locking ring, with a plug-in locking cylinder (26) being lockably insertable through said penetrations.

## Revendications

1. Récipient pour brassin comprenant au moins une ouverture de trou d'homme entourée par un jable, l'ouverture pouvant être fermée avec un couvercle apte à être verrouillé au moyen d'un dispositif de verrouillage, le dispositif de verrouillage présentant un anneau de verrouillage rotatif, **caractérisé en ce que** l'anneau de verrouillage (3, 3a, 3b) est monté sur le côté externe du jable (1) et présente au moins un boulon de verrouillage (6) qui coopère avec un évidement (15) réalisé dans un rebord (2a) du couvercle (2).

2. Récipient pour brassin selon la revendication 1, **caractérisé en ce que** l'anneau de verrouillage (3) est constitué par deux anneaux (3a, 3b) apte à être reliés l'un à l'autre, qui forment un évidement en U (10) pour une bague de roulement (20) qui est disposée quant à elle sur la paroi externe du jable (1) dans une rainure annulaire (9) réalisée de manière correspondante à cet endroit.

3. Récipient pour brassin selon la revendication 1 ou 2, **caractérisé en ce que** l'évidement (15) présente une zone d'entrée (15a) orientée dans la direction de fermeture et ouverte vers le bas, à laquelle se raccorde une section de verrouillage fermée (15b) orientée en direction périphérique.

4. Récipient pour brassin selon la revendication 3, **caractérisé en ce que** l'interface (15c) de l'évidement (15) coopérant avec le boulon de verrouillage (6) est réalisée sous la forme d'une rampe s'élevant légèrement jusqu'à la position terminale de verrouillage, qui aboutit dans un renfoncement de verrouillage (15d).

5. Récipient pour brassin selon au moins une des revendications précédentes, **caractérisé en ce qu'**un contact de fin de course (21) est disposé à l'extérieur du jable (1), qui coopère avec l'anneau de verrouillage via une broche de commutation (22).

6. Récipient pour brassin selon la revendication 5, **caractérisé en ce que** l'anneau de verrouillage présente une surface de commutation (19) qui actionne la broche de commutation (22) lors de la rotation à partir de la position de fermeture jusque dans la position d'ouverture, avant d'atteindre la position d'ouverture.

7. Récipient pour brassin selon au moins une des revendications précédentes, **caractérisé en ce que**, dans la zone du palier (18) pour le couvercle (2), est disposé au moins un disque d'arrêt (7) en rotation avec le couvercle lors de l'ouverture et de la fermeture, qui présente une surface d'arrêt (7a) qui, dans la position d'ouverture de l'anneau de verrouillage (3), lors de l'ouverture du couvercle, pénètre dans une rainure (25) réalisée à cet endroit, en bloquant ainsi une rotation en retour de l'anneau de verrouillage.

8. Récipient pour brassin selon la revendication 7, **caractérisé en ce que** le disque d'arrêt (7) présente un nez de butée (8) qui détermine la position d'ouverture maximale lorsqu'il entre en contact avec le côté inférieur de l'anneau de verrouillage (3).

9. Récipient pour brassin selon au moins une des revendications précédentes, **caractérisé en ce que**, sur le bord (1a) du jable (1), du côté du couvercle, est disposé un joint d'étanchéité périphérique (24) qui est réalisé de telle sorte qu'en cas d'augmentation de la pression à l'intérieur de la cuve pour brassin, la force d'étanchéisation entre le couvercle et le joint d'étanchéité augmente.

10. Récipient pour brassin selon au moins une des revendications précédentes, **caractérisé en ce que**, dans le rebord du couvercle et dans l'anneau de verrouillage sont réalisées des perforations qui viennent se disposer à fleur dans la position de verrouillage, à travers lesquelles peut venir s'insérer un cylindre de fermeture pour serrure à douille (26), de manière apte à être fermé.
